# EUROPEAN PATENT APPLICATION

(11) **EP 4 759 582 A1**
(43) Date of publication of application: **17.06.2026**
(21) Application number: 25221258.4
(22) Date of filing: 05.12.2025
(51) Int. Cl.: B60J 10/24, B60J 10/32, B60J 10/77, B60J 10/17, B60J 10/18

(54) **VEHICLE DOOR TOP SEALING SYSTEM**

(30) Priority: 13.12.2024 CN 202411835793
(71) Applicant: Xingyu Auto Parts Inc., Xianju County, Zhejiang Province 317300 (CN)
(72) Inventor: Zhang, Hao, Xianju County, Zhejiang Province, 317300 (CN); Feng, Xinjian, Xianju County, Zhejiang Province, 317300 (CN); Zhang, Tong, Xianju County, Zhejiang Province, 317300 (CN); Wu, Hanhui, Xianju County, Zhejiang Province, 317300 (CN); Chen, Keyu, Xianju County, Zhejiang Province, 317300 (CN); Wu, Caixing, Xianju County, Zhejiang Province, 317300 (CN)
(74) Representative: Cabinet Chaillot

(57) **Abstract**

The invention discloses a vehicle door top sealing system, belonging to the technical field of automotive components. It aims to solve problems such as vehicle body damage, water leakage at connection points, wind noise, and corrosion caused by penetrating fixation methods like riveting used in existing sealing strips. The system comprises a glass run channel. A connecting part of the glass run channel is provided with a first connecting rail having a U-shaped cross-section. Opposing inner walls of this rail are provided with inner lips and barbs, enabling the channel to be firmly clamped onto the vehicle body sheet metal part in a non-penetrative snap-fit manner. A sealing part extends from the connecting part and is used to elastically abut against the top of the door window glass to form a primary seal. The invention replaces traditional riveting with a non-destructive snap-fit structure, fundamentally eliminating the risks of leakage and corrosion caused by drilling, and greatly simplifies the assembly process. Combined with its multiple sealing designs such as an outer belt line seal and an outer sealing lip, this system significantly improves the vehicle's waterproofing, noise reduction performance, durability, and reliability.

## Description

### TECHNICAL FIELD

The invention relates to the technical field of automobile manufacturing, specifically, to a window glass run channel sealing structure suitable for vehicle doors.

### BACKGROUND ART

In modern automotive design, the door is not only a passage for passengers but also a key component for ensuring cabin sealing and isolating the external environment (such as rainwater, dust, and noise). The door sealing system, especially the sealing structure at the top of the window, is crucial for the vehicle's comfort, durability, and safety.

In traditional framed doors, the window glass is entirely surrounded by the door frame during its lifting process, making the guidance and sealing of the glass relatively easy to achieve. However, with consumers' increasing pursuit of streamlined and stylish automotive appearances, frameless door designs are being more widely used in various types of vehicles, including coupes, sedans, and even SUVs. In frameless door structures, when the window glass is in the closed state, its upper edge directly contacts the sheet metal of the roof side panel or a specially installed sealing strip, lacking the support and encapsulation of a traditional door frame.

This design imposes higher technical requirements on the roof sealing system. Currently, a common sealing solution for frameless doors is to directly fix a pre-formed glass run channel or sealing strip onto the corresponding sheet metal part of the vehicle body. The fixing method typically uses mechanical fasteners, such as rivets or screws. Although this method can provide strong connection strength, it has inherent drawbacks:
(1) it compromises the structural integrity of the vehicle body: installing rivets requires drilling holes in the vehicle body sheet metal. These holes compromise the original continuous structure and anti-corrosion coating of the sheet metal, becoming potential starting points for corrosion. After long-term use, the metal around the connection holes is prone to fatigue due to vibration and stress concentration, and may even develop micro-cracks.
(2) It causes leakage risks: the riveting points themselves are difficult to make completely watertight. Even if sealant is used between the fastener and the sheet metal, over time, material aging, thermal expansion and contraction, and continuous vibration during vehicle operation can lead to sealant failure, thereby creating gaps at the connection points. Rainwater or water flow during vehicle washing can then seep into the vehicle interior through these gaps, causing interior mold, damage to electronic components, and seriously affecting user experience and vehicle value.
(3) It generates wind noise: the structural discontinuity and potential gaps formed at the riveting points disturb airflow during high-speed driving, becoming a source of wind noise and reducing the acoustic comfort inside the vehicle (NVH performance).

To address the above problems, some improvement solutions have been proposed in the industry. For example, the Chinese patent application CN202111361784.7 discloses a vehicle door structure, which adopts a glass run channel sealing strip including transverse and vertical elastic members. Although this solution aims to improve the gap sealing effect between the glass and the sealing member, the glass run channel itself still needs to be installed on the door window frame by means such as rivets, failing to fundamentally solve the structural damage and leakage risks brought by the riveting fixation method.

Therefore, there is an urgent need in the industry for a new type of vehicle door top sealing system that can ensure reliable sealing performance while avoiding causing penetrating damage to the vehicle body sheet metal parts, thereby thoroughly solving the leakage problem at connection points and improving the overall sealing and durability of the vehicle.

### SUMMARY OF THE INVENTION

The invention aims to solve the problems caused by the prevalent use of penetrating fixation methods like riveting in existing vehicle door sealing systems. This method not only damages the vehicle body sheet metal, easily causing water leakage, wind noise, and corrosion at connection points, but also involves a complex installation process and low efficiency.

In order to achieve the above objective, the invention adopts the following technical solution:
a vehicle door top sealing system, comprising a glass run channel, wherein the glass run channel comprises:
a connecting part, comprising a first connecting rail for fixing to a vehicle sheet metal part in a snap-fit manner, the first connecting rail has a U-shaped cross-section to accommodate an edge of the sheet metal part, and opposing inner walls of its U-shaped cross-section are respectively provided with at least one inner lip for abutting against one side of the sheet metal part and at least one barb for locking with the other side of the sheet metal part; and
a sealing part, extending from the connecting part and used to elastically abut against an upper end face of a liftable vehicle door movable glass to form a seal.

Preferably, an angle between the sealing part and the connecting part is greater than or equal to 90° and less than 180°.

Preferably, the sealing part comprises:
a base having an L-shaped cross-section;
a sealing cover connected to one side of the base, used to abut against the movable glass, and a hollow structure is formed between the sealing cover and the base to impart elastic deformation performance to the sealing cover.

Preferably, the sealing part further comprises a second connecting rail connected to another side of the base, and a wavy pattern is provided on an inner wall of the second connecting rail, used to form line contact with the sealing cover when the sealing cover is compressed and deformed.

Preferably, a metal or hard plastic reinforcing skeleton is provided inside the connecting part, and the skeleton extends at least along a length direction of the first connecting rail to provide rigidity and maintain its clamping force on the vehicle sheet metal part.

Preferably, the connecting part further comprises an outer sealing lip, and the outer sealing lip extends obliquely from a side of the first connecting rail facing the sealing part and is configured to abut against a side surface of the movable glass.

Preferably, it further comprises an outer belt line moulding provided on an outer side of the sealing part, and the base is configured to be nested within an inner top surface of the outer belt line moulding to serve a function of shielding and guiding rainwater.

Preferably, the sealing part further comprises a sealing strip, and the sealing strip extends fixedly from the sealing part and obliquely abuts upwards against an inner side of the outer belt line moulding to seal a gap between the base and the outer belt line moulding.

Preferably, the sealing part further comprises a sealing strip, and the sealing strip extends fixedly from the sealing part and obliquely abuts upwards against an inner side of the outer belt line moulding to seal a gap between the base and the outer belt line moulding.

Preferably, a wear-resistant layer formed by curing after spraying is applied on a surface of the sealing cover that contacts the movable glass, and an angle between the sealing part and the connecting part is greater than 90° and less than 180°, to provide an open working space for the sealing cover during spraying.

The invention has the following beneficial effects.

The sealing system of this application is configured as a multiple waterproof barrier, the barrier comprising: an outer belt line moulding, an outer sealing lip, and a sealing cover serving as the primary seal. Rainwater is first blocked and guided by the outer belt line moulding, residual water flow and airflow are further isolated and blocked by the outer sealing lip, and finally, the seal formed by the sealing cover and the glass top thoroughly isolates them, ensuring extremely high waterproof reliability.

By adopting the snap-fit structure formed by the first connecting rail and the inner lips and barbs thereon, the invention firmly fixes the glass run channel onto the vehicle body sheet metal part in a non-penetrative manner. This method completely avoids drilling holes in the vehicle body, protecting the integrity and anti-corrosion coating of the sheet metal part, thereby eliminating the risks of water leakage, wind noise, and corrosion caused by connection pores at the source.

The wear-resistant layer on the surface of the sealing cover significantly reduces the friction resistance and noise during the lifting and lowering of the movable glass, making the operation smoother and quieter. Meanwhile, the hollow structure of the sealing cover and the design of the wavy pattern not only provide excellent sealing elasticity but also avoid potential adhesion and abnormal noises that may occur after long-term use or under high temperatures, extending the effective service life of the sealing system.

Since the glass run channel in the door top sealing system of this application is not installed on the vehicle body sheet metal parts of the vehicle body, door, or frame by fasteners such as rivets, the installation of the glass run channel does not cause structural damage to itself or the vehicle body sheet metal parts by rivets, thereby preventing gaps from appearing at the connection points of the glass run channel, vehicle body sheet metal parts, and rivets, thus preventing water leakage and dripping at those points. Adopting a "press-to-fit" snap-fit installation method eliminates the need for complex processes such as drilling, applying sealant, tightening screws, or riveting, greatly simplifying the assembly process on the production line, shortening working hours, reducing manufacturing costs, and ensuring consistent installation quality.

The wear-resistant layer on the surface of the sealing cover can be achieved by two preferred methods:
when a low-friction material is co-extruded integrally with the main body of the sealing cover, the angle between the sealing part and the connecting part is set to 90°; this angle provides ideal conditions for the design of the co-extrusion die and the stable extrusion of the material;
when a sprayed coating needs to be applied to the surface of the sealing cover, the angle is set to greater than 90° and less than 180°; this larger angle places the sealing cover in an "open" state, providing sufficient working path and space for the spraying nozzle, thereby ensuring the uniformity and integrity of the coating.

This intelligent linkage design between structure and process enables the invention to flexibly select the optimal manufacturing solution according to cost, performance, and production requirements, greatly improving production efficiency and application versatility of the product, and particularly enabling it to meet the stringent requirements for high performance and exquisite appearance of frameless doors.

### BRIEF DESCRIPTION OF ACCOMPANY DRAWINGS

To illustrate the technical solutions of the embodiments of the invention more clearly, the drawings needed for the embodiments will be briefly introduced hereinafter. It should be understood that the following drawings only show some embodiments of the invention and therefore should not be considered as limiting the scope. For those skilled in the art, other related drawings can be obtained based on these drawings without creative effort.
FIG. 1 is a schematic structural diagram of the invention;
FIG. 2 is a cross-sectional view of the invention;
FIG. 3 is an enlarged view of part A in FIG. 2;
FIG. 4 is a schematic structural diagram of one type of glass run channel of the invention.
FIG. 5 is a schematic structural diagram of another type of glass run channel of the invention.

In the drawings: 1 refers to the movable glass; 2 refers to the outer belt line moulding; 3 refers to the spacer strip; 4 refers to the base; 5 refers to the sealing strip; 6 refers to the sealing cover; 7 refers to the first connecting rail; 8 refers to the inner lip; 9 refers to the barb; 10 refers to the outer sealing lip; 11 refers to the second connecting rail; 12 refers to the skeleton; 13 refers to the wear-resistant layer; 14 refers to the wavy pattern.

### SPECIFIC EMBODIMENT OF THE INVENTION

To make the objectives, technical solutions, and advantages of the embodiments of the invention clearer, the technical solutions in the embodiments of the invention will be clearly and completely described hereinafter with reference to the accompanying drawings. Obviously, the described embodiments are only a part of the embodiments of the invention, not all of them. The components of the embodiments of the invention, generally described and illustrated in the drawings herein, can be arranged and designed in various different configurations.

Therefore, the following detailed description of the embodiments of the invention provided in the accompanying drawings is not intended to limit the scope of the claimed invention, but merely represents selected embodiments of the invention. Based on the embodiments of the invention, all other embodiments obtained by those of ordinary skill in the art without creative effort shall fall within the protection scope of the invention.

It should be noted that similar reference numerals and letters designate similar items in the following drawings. Therefore, once an item is defined in one drawing, it does not require further definition and explanation in subsequent drawings.

The vehicle door top sealing system involved in the invention aims to improve the sealing performance and durability of the vehicle door, especially for frameless doors. When the window is closed, the upper end of the movable glass 1 contacts the sealing cover 6 in the glass run channel, causing the sealing cover 6 to undergo elastic deformation, effectively reducing the gap between the movable glass 1 and the sealing cover 6, and enhancing the sealing effect.

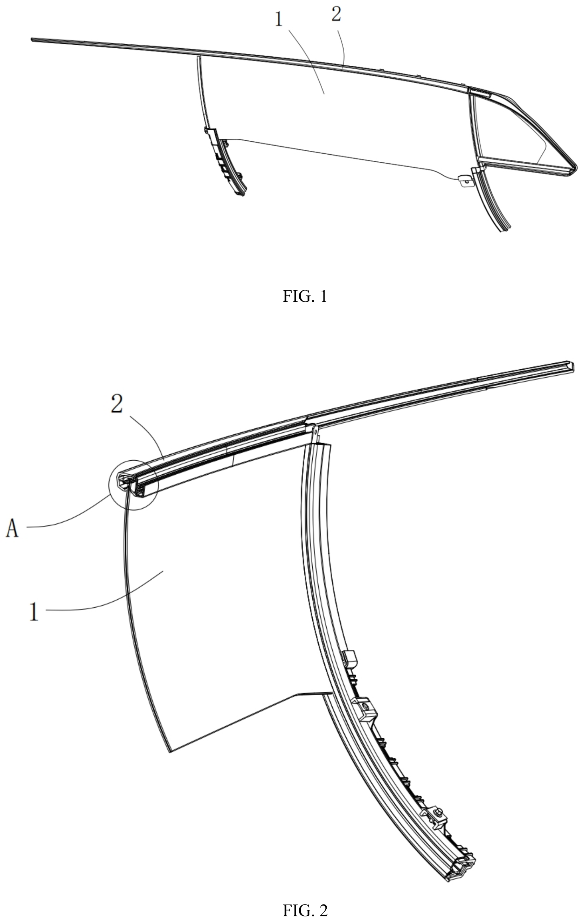

A vehicle door top sealing system, as shown in FIG. 1, comprises a glass run channel. The glass run channel comprises a sealing part and a connecting part. An angle exists between the sealing part and the connecting part, and the angle is greater than or equal to 90° and less than 180°. The connecting part can be used for fixed connection to a vehicle sheet metal part, and the sealing part is used for abutting against the upper end face of the movable glass 1.

The glass run channel of the invention is typically manufactured using an integral extrusion molding process to ensure the continuity and consistency of its cross-sectional profile. The main part, including the base 4, sealing cover 6, first connecting rail 7, and second connecting rail 11, etc., can be made of ethylene propylene diene monomer (EPDM) with excellent weather resistance, aging resistance, and elasticity, or can be made of thermoplastic elastomer (TPE) or polyvinyl chloride (PVC), etc., selected according to specific cost and performance requirements.

The sealing part is mainly composed of a base 4, a sealing strip 5, a second connecting rail 11, and a sealing cover 6 connected together; the connecting part is composed of a first connecting rail 7, inner lips 8, and barbs 9.

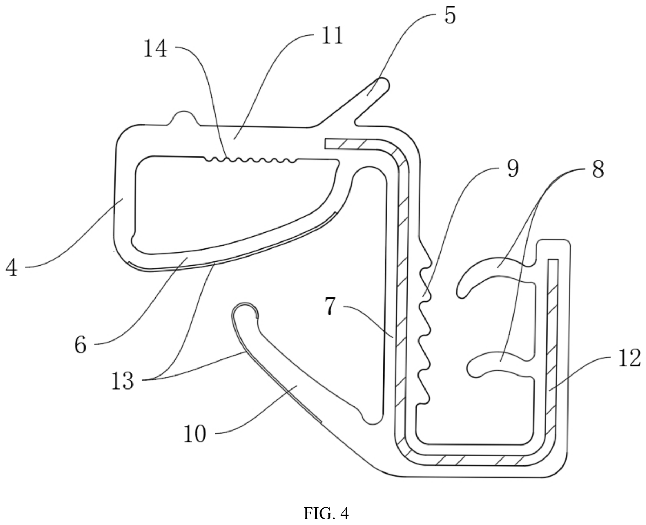

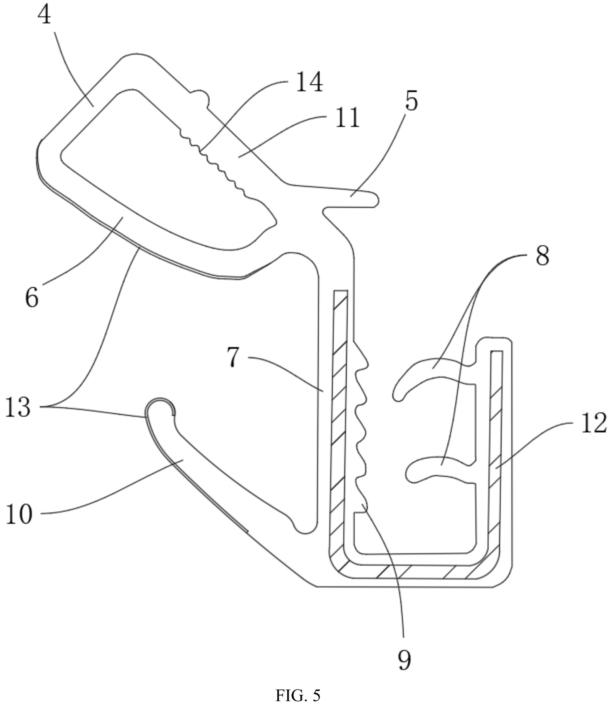

As shown in FIG. 4, an inner skeleton 12 is provided inside the connecting part and extends into the sealing part. This design can assist in making the angle between the sealing part and the connecting part more stable, reducing deformation of the angle due to factors such as high temperature and aging; as shown in FIG. 5, a U-shaped inner skeleton 12 is provided inside the connecting part but does not extend into the sealing part, facilitating the spraying of the sealing part and allowing free adjustment of the angle within the range of 90°-180°.

Specifically, a certain angle is formed between the first connecting rail 7 and the second connecting rail 11. Taking FIG. 4 as an example, when measuring, draw a first centerline along the vertical direction through half the wall thickness of the first connecting rail 7, draw a second centerline along the horizontal direction through half the wall thickness of the second connecting rail 11, and measure the angle between the first centerline and the second centerline to obtain the result.

The skeleton 12, as a reinforcing member, serves to provide rigidity and shape retention for the connecting part, ensuring a firm clamp on the vehicle sheet metal part after installation. This skeleton 12 is usually made of metal material, such as stamped steel or aluminum strip, to provide sufficient structural strength. During the manufacturing process, the metal skeleton 12 is encapsulated inside the rubber material of the first connecting rail 7 through a co-extrusion process. In some applications requiring high flexibility for bending, the skeleton 12 can also be segmented metal inserts or high-hardness reinforced plastic.

In the invention, the sealing of the top surface of the movable glass 1 is accomplished by setting up the glass run channel. The connecting part is responsible for the main function of fixed connection with the vehicle sheet metal part. However, in this process, fasteners such as rivets that damage the vehicle sheet metal part and the glass run channel are not used to connect the vehicle sheet metal part and the glass run channel. Therefore, the glass run channel in the door top sealing system of this application can not only seal the top of the movable glass 1 in the door but also prevent holes from appearing at the connection point between the vehicle sheet metal part and the glass run channel, thereby preventing water leakage. Since an angle exists between the sealing part and the connecting part, and the angle is greater than or equal to 90° and less than 180°, the sealing part can adjust the angle between the sealing part and the connecting part according to different processes.

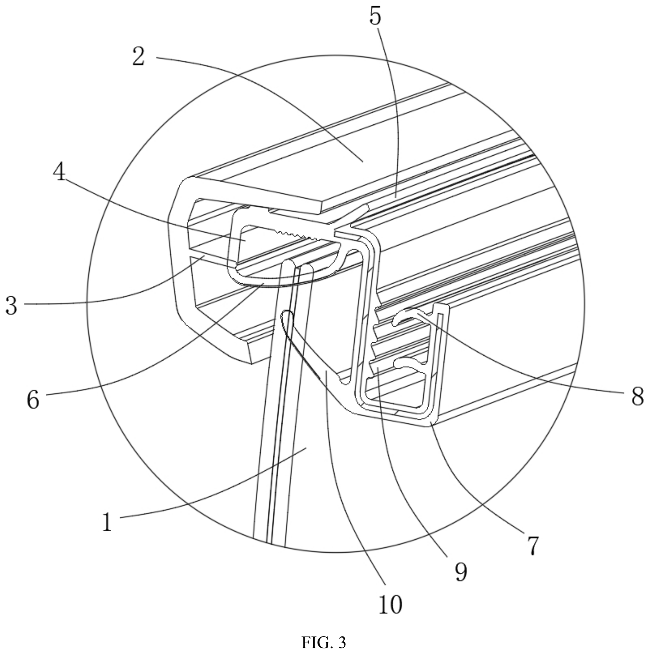

Preferably, as shown in FIGS. 2, 3, and 4, the angle is equal to 90°, and the surface of the sealing part is co-extruded with a low-friction coefficient material to form the wear-resistant layer 13. The co-extrusion process is chosen because when the angle is 90°, spray coating of wear-resistant paint would be obstructed by the outer sealing lip 10, making it difficult to spray evenly on the outer surface of the sealing cover 6. However, when a low-friction coefficient material is co-extruded with the sealing part, the aforementioned technical difficulty is overcome. Thus, the sealing part does not need to be unfolded, and the angle between the sealing part and the connecting part can remain at 90° to achieve the goal.

The low-friction coefficient material is prepared according to the formula and preparation method mentioned in any embodiment of the Chinese invention patent CN117186524A, preferably the formula and process of Embodiment 8.

The benefits of choosing to form the wear-resistant layer 13 by co-extruding a low-friction coefficient material with the sealing part include: significantly reducing the noise generated when the movable glass 1 contacts the sealing part during lifting and lowering, and also reducing the wear on the movable glass 1 and the sealing part of the glass run channel, extending their service life. Secondly, the wear resistance and aging resistance of the low-friction material are good, helping to maintain long-term sealing performance and reduce maintenance costs. Furthermore, the low-friction coefficient material can also improve waterproof performance and reduce the possibility of rainwater penetration, which plays an important role in keeping the vehicle interior dry and preventing moisture from corroding electronic equipment and interiors inside the vehicle.

Preferably, as a new design, as shown in FIG. 5, the angle between the sealing part and the connecting part in this structure is greater than 90° and less than 180°. This is because the spraying action requires the surface of the sealing part to be unfolded and retain sufficient space for the coating spray operation on the surface of the sealing part. Therefore, the angle between the sealing part and the connecting part must be greater than 90° and less than 180°. In this case, the outer sealing lip 10 will not obstruct the spraying of paint onto the surface of the sealing part, so directly spraying wear-resistant paint onto the surface of the sealing part can form the wear-resistant coating. During frequent window opening and closing, the sealing part in the glass run channel is less likely to be damaged or leak due to the presence of the wear-resistant coating.

Those skilled in the art know that after the sealing strip wear-resistant paint is sprayed on the surface of the sealing strip, the solvent is evaporated at high temperature, and a dense, tight, and complete solid film can be formed on the surface of the sealing strip. The wear-resistant paint of this application can be purchased directly from the market, and those skilled in the art do not need to exert creative effort for this. As an example of wear-resistant paint, polyurethane coating paint can be selected as the sealing strip wear-resistant paint. A water-based polyurethane paint, using water as the solvent to replace traditional organic dispersion solvents such as xylene and acetone, can be chosen, making the overall VOC content of the sealing strip relatively low.

Preferably, the sealing part comprises a strip-shaped base 4 with an L-shaped cross-section and a sealing cover 6 fixedly connected to the base 4. The area between the base 4 and the sealing cover 6 is hollow, and the sealing cover 6 has elastic deformation performance.

The base 4 provides support for the sealing cover 6, allowing the sealing cover 6 to have a structure to adhere to. Moreover, the base 4 has a certain hardness and can bear the force when the movable glass 1 moves upward. The area between the sealing cover 6 and the base 4 is hollow, and the sealing cover 6 has elastic deformation performance. When the movable glass 1 moves upward and contacts the sealing cover 6, the sealing cover 6 deforms and wraps around the top of the movable glass 1 until it contacts the wavy pattern 14. At this time, the gap between the movable glass 1 and the sealing cover 6 decreases, which can improve the sealing effect when the movable glass 1 closes the door.

The wavy pattern 14 changes the contact mode between the sealing cover 6 and the inner wall of the second connecting rail 11 from surface contact to line contact. This is because rubber can become somewhat sticky in hot weather. After the movable glass 1 impacts and buffers the sealing cover 6 multiple times, the sealing cover 6 may adhere to the bottom wall of the second connecting rail 11. Setting the wavy pattern 14 can effectively prevent the sealing cover 6 from adhering to the bottom wall of the second connecting rail 11 and generating abnormal noises. At the same time, when opening/closing the door or driving on bumpy roads, the sealing cover 6 can provide effective buffering for the movable glass 1 and prevent abnormal noises.

Preferably, it further comprises an outer belt line moulding 2. A spacer strip 3 of equal length is fixedly connected to the inner side of the outer belt line moulding 2. The base 4 can be embedded between the spacer strip 3 and the inner top surface of the outer belt line moulding 2.

The outer belt line moulding 2 primarily provides a previous level of waterproofing before the seal between the movable glass 1 and the sealing cover 6. The opening between the outer belt line moulding 2 and the movable glass 1 is located below the top surface of the movable glass 1, so that when rainwater falls from the sky, it does not immediately flow towards the area between the movable glass 1 and the sealing cover 6. Meanwhile, the outer belt line moulding 2 can shield this glass run channel, making the appearance of the vehicle body sheet metal parts more aesthetically pleasing.

Preferably, the sealing part further comprises a sealing strip 5 fixedly connected to one side of the second connecting rail 11 and extends towards the side of the connecting part. The sealing strip 5 is arranged obliquely upward and abuts against the outer belt line moulding 2.

The sealing strip 5 further reduces the gap between the base 4 and the outer belt line moulding 2 when the sealing part is engaged with the outer belt line moulding 2, thereby enhancing its waterproof performance.

Preferably, the connecting part comprises a first connecting rail 7 with a U-shaped cross-section. One inner side wall of the first connecting rail 7 is fixedly connected with several inner lips 8. The other inner side wall of the first connecting rail 7 is fixedly connected with several barbs 9. When the connecting part is connected to the vehicle sheet metal part, the vehicle sheet metal part is embedded within the first connecting rail 7, and the barbs 9 and inner lips 8 abut against both sides of the vehicle sheet metal part, fixing the sealing system onto the vehicle sheet metal. A rigid skeleton 12 is provided inside the first connecting rail 7 to enhance the anti-deformation capability of the sealing system, making the installation of the sealing system more secure.

The first connecting rail 7 with a U-shaped cross-section replaces the conventional glass run channel structure, avoiding the connection of the glass run channel through fasteners like rivets that damage the vehicle sheet metal part and the glass run channel. This prevents damage to the vehicle sheet metal part and the glass run channel, which would otherwise lead to water leakage at the gaps where fasteners like rivets penetrate the vehicle sheet metal part and the glass run channel for connection. Moreover, the inner lips 8 and the several barbs 9 also serve to connect the first connecting rail 7 to the vehicle sheet metal part, ensuring that the connection between the first connecting rail 7 and the vehicle sheet metal part has good connection strength and sealing effect.

Preferably, the connecting part further comprises an outer sealing lip 10 fixedly connected to a side of the first connecting rail 7 facing the sealing part, and the outer sealing lip 10 is arranged obliquely upward. The outer sealing lip 10 is used to abut against the end face of the movable glass 1.

The outer sealing lip 10 provides a third line of defense for the door top sealing system. If rainwater penetrates the gap between the movable glass 1 and the sealing cover 6, it can be further blocked by the outer sealing lip 10 abutting against the end face of the movable glass 1, preventing rainwater from directly entering the vehicle interior, thereby ensuring the dryness of the vehicle and improving the waterproof performance of the sealing system.

During installation, align the connecting part of the glass run channel, i.e., the U-shaped first connecting rail 7, with the flange edge of the door window frame or the body roof sheet metal, and press firmly to complete assembly. During this process: the U-shaped opening of the first connecting rail 7 serves a guiding function.

The multiple inner lips 8 on the inner wall first contact the sheet metal part. They have a certain elasticity, providing initial positioning and sealing while accommodating the thickness tolerance of the sheet metal part.

As it is pressed further in, the edge of the sheet metal part will pass over the barbs 9. The special angle design of the barbs 9 makes them easy to slide in but difficult to pull out. Their tips or tooth surfaces will tightly press against the other side surface of the sheet metal part, working together with the inner lips 8 to generate a powerful clamping force, thereby firmly fixing the entire glass run channel onto the vehicle body.

It should be understood that the invention is not limited to the precise structure shown in the drawings. For example:
the number, shape, and distribution of the inner lips 8 and barbs 9 can be adjusted according to the thickness of the sheet metal part to be clamped and the required clamping force. For instance, for thicker sheet metal, the angle of the barbs can be smaller; for situations requiring greater pull-out force, the number of barbs can be increased.

The cross-sectional shape of the sealing cover 6 can also be diversified, such as a dual-cavity structure to provide more complex compression and rebound characteristics, or specific textures preset on its contact surface with the glass to improve the sealing effect.

In some designs, if the waterproof requirements are extremely high, the sealing strip 5 and the outer belt line moulding 2 can be designed to have a tighter engagement structure, or can even be co-extruded into an integral component.

Through the above supplementary description, the technical solution, internal working logic, and its significant advantages over the prior art of the invention become clearer. The invention systematically solves the sealing challenge at the top of frameless doors through a clever non-destructive installation structure and multiple sealing designs.

In summary, the vehicle door top sealing system involved in the invention aims to improve the sealing performance and durability of the vehicle door, especially for frameless doors. When the window is closed, the upper end of the movable glass 1 contacts the sealing cover 6 in the glass run channel, causing the sealing cover 6 to undergo elastic deformation, effectively reducing the gap between the movable glass 1 and the sealing cover 6, and enhancing the sealing effect.

During the upward movement of the movable glass 1, the outer sealing lip 10 first contacts the inner side surface of the movable glass 1. This lip 10 is inclined upward and is flexible, able to smoothly guide the glass and form a first dynamic seal, effectively blocking most of the oncoming airflow and rainwater during high-speed driving.

As the movable glass 1 continues to rise, just before its top edge contacts the sealing cover 6, the outermost outer belt line seal 2 acts like an eave. It not only protects the underlying sealing structure from direct sunlight and debris but also guides and drains rainwater flowing down from the roof outward, reducing the amount of water reaching the core sealing area at the source.

When the upper end face of the movable glass 1 abuts against the sealing cover 6, due to the hollow design between the base 4 and the sealing cover 6, and the excellent elasticity of the sealing cover 6 itself, it undergoes controlled elastic deformation under the pressure of the glass, tightly wrapping around the top contour of the glass, forming a continuous and uniformly pressurized primary sealing surface, achieving the effect of isolating water and noise.

After the glass is fully closed, the compressed sealing cover 6 may contact the inner wall of the second connecting rail 11. The wavy pattern 14 provided on this inner wall changes surface contact into line contact, greatly reducing the contact area. This effectively prevents adhesion caused by softened rubber in hot weather, avoiding abnormal noises or tearing when the window is opened; at the same time, on bumpy roads, it also provides buffering for the glass, reducing vibration noise.

The installation method of the glass run channel of the invention avoids the use of fasteners such as rivets, reduces damage to the vehicle body sheet metal parts, lowers the risk of gaps at connection points, and effectively prevents water leakage and dripping. The fixed connection between the glass run channel and the vehicle body sheet metal part is achieved through structures such as the first connecting rail 7, inner lips 8, and barbs 9, ensuring the connection strength and sealing effect of the sealing system, and reducing the possibility of water leakage.

Regarding the processing technology of the sealing cover 6, the invention provides two different treatment methods. If a low-friction coefficient material needs to be co-extruded to form a co-extruded low-friction layer, the angle between the sealing part and the connecting part should be maintained at 90° to ensure uniform material distribution and low-friction characteristics; conversely, if a coating needs to be sprayed on the surface of the sealing cover 6, the sealing cover 6 needs to remain open, and the angle should be kept within the range greater than 90° and less than 180° to facilitate uniform spraying and curing of the coating, without affecting the production and processing of the glass run channel.

This design not only improves the sealing performance of the door but also enhances its durability and maintenance convenience. By reducing the friction between the movable glass 1 and the sealing cover 6, the noise and wear during the lifting and lowering of the movable glass 1 are reduced, extending the service life of the components. Meanwhile, by optimizing the processing technology of the sealing cover 6, production efficiency and product quality are improved, enabling the door (especially frameless doors) to possess excellent functionality and practicality while maintaining an aesthetic appearance.

The above descriptions are only preferred embodiments of the invention and are not intended to limit the invention. For those skilled in the art, the invention may have various modifications and changes. Any modifications, equivalent replacements, improvements, etc., made within the spirit and principles of the invention shall be included within the protection scope of the invention.

## Claims

1. A vehicle door top sealing system, comprising a glass run channel, wherein the glass run channel comprises:
a connecting part, comprising a first connecting rail for fixing to a vehicle sheet metal part in a snap-fit manner, the first connecting rail has a U-shaped cross-section to accommodate an edge of the sheet metal part, and opposing inner walls of its U-shaped cross-section are respectively provided with at least one inner lip for abutting against one side of the sheet metal part and at least one barb for locking with the other side of the sheet metal part; and
a sealing part, extending from the connecting part and used to elastically abut against an upper end face of a liftable vehicle door movable glass to form a seal.

2. The system according to claim 1, wherein an angle between the sealing part and the connecting part is greater than or equal to 90° and less than 180°.

3. The system according to claim 1 or 2, wherein the sealing part comprises:
a base having an L-shaped cross-section;
a sealing cover connected to one side of the base, used to abut against the movable glass, and a hollow structure is formed between the sealing cover and the base to impart elastic deformation performance to the sealing cover.

4. The system according to claim 3, wherein the sealing part further comprises a second connecting rail connected to another side of the base, and a wavy pattern is provided on an inner wall of the second connecting rail, used to form line contact with the sealing cover when the sealing cover is compressed and deformed.

5. The system according to claim 1 or 2, wherein a metal or hard plastic reinforcing skeleton is provided inside the connecting part, and the skeleton extends at least along a length direction of the first connecting rail to provide rigidity and maintain its clamping force on the vehicle sheet metal part.

6. The system according to claim 1 or 2, wherein the connecting part further comprises an outer sealing lip, and the outer sealing lip extends obliquely from a side of the first connecting rail facing the sealing part and is configured to abut against a side surface of the movable glass.

7. The system according to claim 3, wherein it further comprises an outer belt line moulding provided on an outer side of the sealing part, and the base is configured to be nested within an inner top surface of the outer belt line moulding to serve a function of shielding and guiding rainwater.

8. The system according to claim 7, wherein the sealing part further comprises a sealing strip, and the sealing strip extends fixedly from the sealing part and obliquely abuts upwards against an inner side of the outer belt line moulding to seal a gap between the base and the outer belt line moulding.

9. The system according to claim 3, wherein a wear-resistant layer is integrally formed by co-extrusion on a surface of the sealing cover that contacts the movable glass, and an angle between the sealing part and the connecting part is 90°.

10. The system according to claim 3, wherein a wear-resistant layer formed by curing after spraying is applied on a surface of the sealing cover that contacts the movable glass, and an angle between the sealing part and the connecting part is greater than 90° and less than 180°, to provide an open working space for the sealing cover during spraying.
